# EUROPÄISCHE PATENTSCHRIFT

(11) **EP 0 471 180 B1**
(45) Veröffentlichungstag und Bekanntmachung des Hinweises auf die Patenterteilung: **28.08.1996**
(21) Anmeldenummer: 91111177.1
(22) Anmeldetag: 05.07.1991
(51) Int. Cl.: G05D 5/06, B24B 49/02

(54) **Verfahren und Vorrichtung zur Erkennung von Bearbeitungsfehlern, insbesondere von Schleifmaschinen**
Method and apparatus for detecting faulty machining, especially occuring with grinding machines
Procédé et appareil pour détecter les défauts de travail, notamment dans les machines pour meuler

(30) Priorität: 11.08.1990 DE 4025522
(43) Veröffentlichungstag der Anmeldung: 19.02.1992
(73) Patentinhaber: Wolter-Doll, Dieter, D-58313 Herdecke (DE)
(72) Erfinder: Wolter-Doll, Dieter, D-58313 Herdecke (DE)
(74) Vertreter: Patentanwälte Meinke, Dabringhaus und Partner

(56) Entgegenhaltungen:
- EP-A- 0 341 968
- EP-A- 0 352 635
- DD-A- 221 411
- DE-A- 3 607 236
- GB-A- 1 384 674
- Understanding Electronic Control of Automation Systems, Texas Instrument Learning Centre, 1988, Seite 9-12.

## Beschreibung

Die Erfindung richtet sich auf ein Verfahren und eine Vorrichtung zur Erkennung von Bearbeitungsfehlern mechanisch Oberflächen abtragender Schleifmaschinen der im Oberbegriff des Anspruches 1 bzw. Anspruches 6 angegebenen Gattung.

Es gibt eine Reihe mechanischer Bearbeitungsvorgänge, bei denen an den Oberflächen von Werkstücken Fehler auftreten können, die nicht oder nur sehr aufwendig erkennbar sind, die aber gleichwohl bei längerem Gebrauch der fehlerhaften Werkstücke zu deren endgültiger Zerstörung führen. Typische Beispiele sind beispielsweise Schleifbrand und Schleifrisse von mit der Schleifmaschine endbearbeiteten Werkstücken, wie Wellen, Zahnräder od. dgl. Die auftretenden Fehler können ganz unterschiedliche Ursachen haben. Sie können von Werkstücktoleranzen herrühren, von Positionierungsfehlern, von unterschiedlicher Werkstückhärte und selbstverständlich vom Zustand der Werkzeuges, beispielsweise vom Zustand der Schleifscheibe.

Gerade in der Serienfertigung werden derartige Arbeitsvorgänge automatisiert, was zur Folge hat, daß im Prinzip jedes bearbeitete Werkstück nachkontrolliert werden muß, um später Zerstörungen durch diese Bearbeitungsfehler bei den Werkstücken zu vermeiden bzw. von vornherein für ein Aussortieren fehlerhafter Werkstücke zu sorgen. Eine derartige Überprüfung ist naturgemäß sehr aufwendig.

Aufgabe der Erfindung ist daher die Schaffung einer Lösung, mit der das Auftreten derartiger Bearbeitungsfehler unmittelbar während der Bearbeitung des Werkstückes selbst erkannt werden kann, derart, daß entweder das Werkstück als fehlerhaft identifiziert wird oder aber Gegenmaßnahmen möglich gemacht werden.

Mit einem Verfahren der eingangs bezeichneten Art wird diese Aufgabe gemäß der Erfindung durch die kennzeichnenden Merkmale des Anspruches 1 gelöst.

Es hat sich gezeigt, daß die weiter oben angegebenen Fehlerquellen unmittelbar zu einer erhöht ausgeübten Kraft vom Werkzeug auf das Werkstück führen. Ist beispielsweise aufgrund der Werkstücktoleranzen das Werkstück im Bearbeitungsbereich zu stark ausgefallen, muß ein größerer Betrag abgeschliffen werden, was bei automatisch vorfahrender Schleifscheibe sofort zu einer höheren Schleifkraft führt. Ist das Werkstück falsch in der Werkstückaufnahme positioniert, kann ein ähnlicher Fehler hervorgerufen werden. Ist eine falsche Werkstückhärte im Bearbeitungsbereich vorhanden, führt dies bei automatisiertem Vorschub der Schleifscheibe wiederum zur erhöhten Kraft. Setzt sich beispielsweise auch die Schleifscheibe zu, muß zur Abtragung eines vorbestimmten Maßes an Oberflächenmaterial ggf. die Kraft auf das Werkstück erhöht werden. Das Erfassen aller dieser möglichen Fehlerquellen und damit das Ansteigen der vom Werkzeug auf das Werkstück ausgeübten Kraft kann problemlos mittels der Erfindung erfolgen.

In Ausgestaltung der Erfindung ist vorgesehen, daß die Schleifkraft direkt an der Werkzeugspindel oder indirekt über die Verformung der Werkzeugaufnahme gemessen wird, wobei insbesondere vorgesehen sein kann, daß die Schleifkraft berührungslos über hochauflösende, induktive Wegaufnehmer an der Werkzeugaufnahme gemessen wird. Die Erfindung sieht auch vor, statt induktiver Wegaufnehmer an der Werkzeugaufnahme bezugspunktfreie Beschleunigungsmesser einzusetzen oder in Kombination bezugsfreie Beschleunigungsmesser mit Wegmesser. Es hat sich gezeigt, daß bei bestimmten Bearbeitungsvorgängen mit Beschleunigungsmessern die dynamischen Auslenkungen, sei es des Werkstückes, des Werkzeuges oder der Werkstückaufnahme, gemessen werden kann. Über diese Schwingungsaufnehmer lassen sich Referenzkurven erstellen, mit denen dann eine Ist-Kurve verglichen wird.

Eine einfache erfindungsgemäße Vorgehensweise besteht darin, zunächst gemäß Bearbeitungsprogramm ein Werkstück zu bearbeiten und während der Gesamtzeit alle Ist-Werte zu erfassen und zu speichern. Ist das Werkstück nach erfolgter individueller, sehr ausführlicher Überprüfung fehlerfrei, werden die so ermittelten Ist-Werte im Rechner als Soll-Werte abgespeichert und bei nachfolgender Bearbeitung gleicher Werkstücke elektronisch verarbeitet.

Bei Formschleifmaschinen ist es bekannt, gleichzeitig beispielsweise zwei Zahnflanken zu schleifen. Um hier nicht einen einseitigen Fehler überproportional zu erfassen und zu verwerten, sieht die Erfindung vor, daß wenigstens zwei im Winkel zueinander stehende induktive Wegaufnehmer zur Schleifkraftmessung eingesetzt werden, wobei die Meßsignale zweikanalig digitalisiert, gespeichert und gefiltert werden. Damit ist es möglich, im Datenerfassungszyklus Fehler zu vermeiden. Wird z.B. durch einen Werkstückverzug nur eine Zahnflanke extrem stark bearbeitet, könnte dies bei einer eindimensionalen Messung nicht erkannt werden. Hier ist es zweckmäßig, aie Einzel- und Gesamtmeßwerte mit inren jeweiligen Grenzwerten "zweidimensional" zu vergleichen.

An dieser Stelle sei bemerkt, daß die gleiche Art der Messung selbstverständlich erfindungsgemäß auch dreidimensional durchgeführt werden kann. Es sind dann entsprechend drei Meßwertaufnehmer vorgesehen.

Die Erfindung sieht auch vor, daß über die Meßwerterfassung zentral die Schleifvorgänge, insbesondere Vorschub- und Antriebsgeschwindigkeit, des Werkzeuges gesteuert werden, wobei in weitere Ausgestaltung vorgesehen sein kann, daß alle Meßsignal in Form von Kurven oder Meßwertkolonnen über einen Drucker ausgedruckt werden.

Um Schäden an Werkzeugmaschinen zu verhindern ist es bekannt, Vibrationen dieser Maschinen zu messen, etwa aus der DE-81 21 451-A. Eine Werkzeugbruchüberwachung ist beispielsweise auch aus der DE-37 11 434-A bekannt. Dabei werden nicht Fehler an den zu bearbeitenden Werkstücken nachgewiesen, sondern lediglich ungewöhnliche Vorgänge an den Werkzeugen bzw. den Werkzeugmaschinen.

Zur Lösung der weiter oben angegebenen Aufgabe sieht die Erfindung auch eine Vorrichtung vor, die sich durch die kennzeichnenden Merkmale des Anspruches 6 auszeichnet.

Die Ausgestaltung macht sich die Erkenntnis zunutze, daß beispielsweise Schleifbrand bei einer zu großen Schleifkraft auftritt, wobei dann eine elastische Verformung z.B. der Werkstückaufnahme oder der Werkzeugspindel bezogen auf das Maschinengrundbett auftritt. Nach der Erfindung können schleifkraftabhängige Formen im Bereich von 5 bis 15 µm in einem Meßachsenbereich ermittelt werden.

Die Erfindung sieht auch vor, daß als Meßwertaufnehmer berührungslos hochauflösende induktive Wegaufnehmer und/oder bezugspunktfreie Beschleunigungsmesser vorgesehen sind.

Vorteilhaft ist es, wenn zur Übertragung der Meßwerte auf eine zentrale Prozessoreinheit jedem Wegaufnehmer ein elektronischer Verstärker, ein Filter und ein A/D-Wandler zugeordnet ist, wie dies die Erfindung ebenfalls vorsieht. Die Vorrichtung zeichnet sich schließlich noch dadurch aus, daß sie wenigstens mit einem Speichermittel zur Abspeicherung eines Soll-Wertes, einer vorbestimmten Normalschleifkurve und eines Ist-Wertes ausgerüstet ist.

Die Erfindung ist nachstehend anhand der Zeichnung beispielsweise näher erläutert. Diese zeigt in
- Fig. 1: in schematischer Darstellung eine Schleifmaschine mit den erfindungsgemäßen Einrichtungen,
- Fig. 2: ein vereinfachtes elektronisches Schaltbild der Datenübertragung sowie in
- Fig. 3: ein Protokoll einer Schwingkurve, ermittelt durch Beschleunigungsmesser nach der Erfindung.

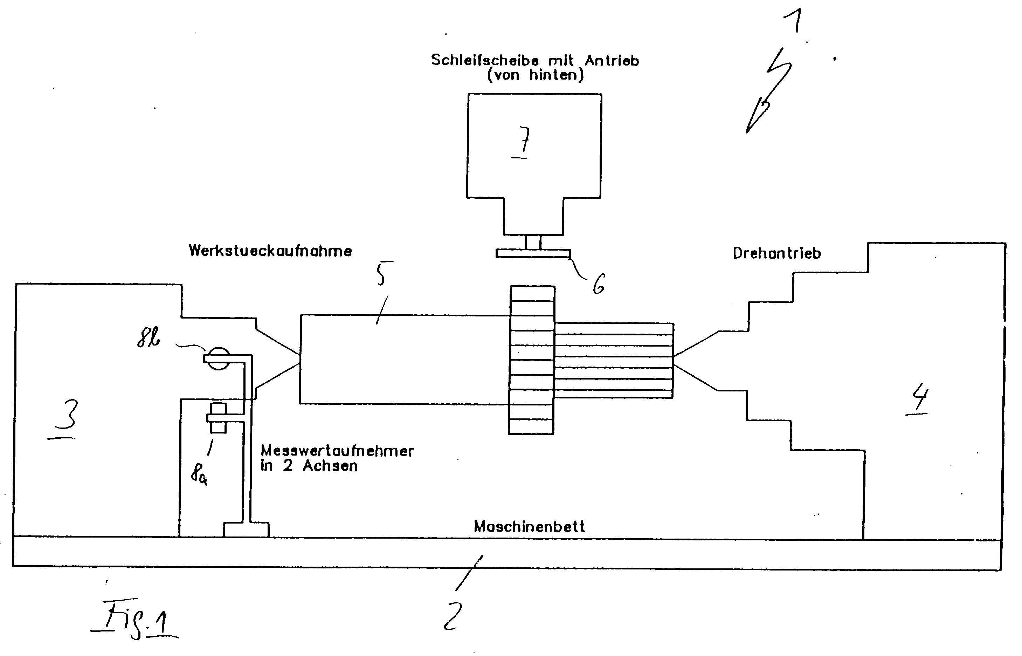

Die allgemein mit 1 bezeichnete Vorrichtung weist im dargestellten Beispiel an einem gemeinsamen Maschinenbett 2 eine Werkstückaufnahme 3 und einen Drehantrieb 4 auf, zwischen deren Spitzen das Werkstück 5, beispielsweise ein Getriebezahnrad, einyespannt ist. Zur Bearbeitung ist eine andeutungsweise wiedergegebene Schleifscheibe 6 mit Antrieb 7 in Fig. 1 angedeutet.

Zwischen Maschinenbett 2 und Werkstückaufnahme 3 sind zwei mit ihren Achsen senkrecht stehende Meßwertaufnehmer 8a und 8b als berührungslose Wegeaufnehmer vorgesehen.

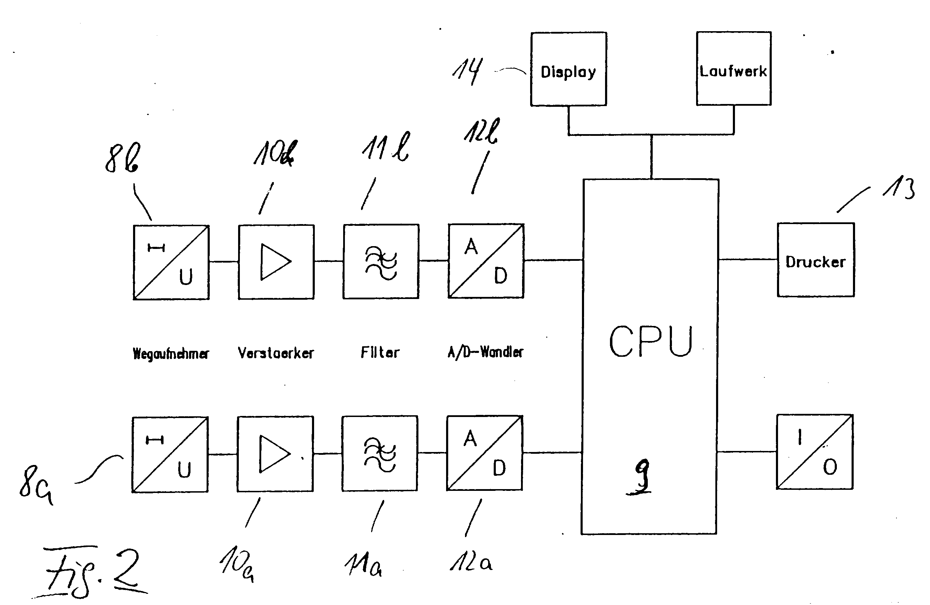

In Fig. 2 ist der Datenfluß der von den Wegaufnehmern 8a und 8b ermittelten Daten zur zentralen Prozessoreinheit 9 dargestellt. Dabei ist jedem Meßwertaufnehmer 8a und 8b ein Verstärker 10a bzw. 10b, ein Filter 11a bzw. 11b und ein A/D-Wandler 12a bzw. 12b zugeordnet. Die CPU, d.h. die zentrale Prozessoreinheit 9, kann darüber hinaus beispielsweise mit einem Drucker 13 und/oder einer Anzeigeeinheit, beispielsweise einem Display 14 und einem Laufwerk 15 ausgerüstet sind.

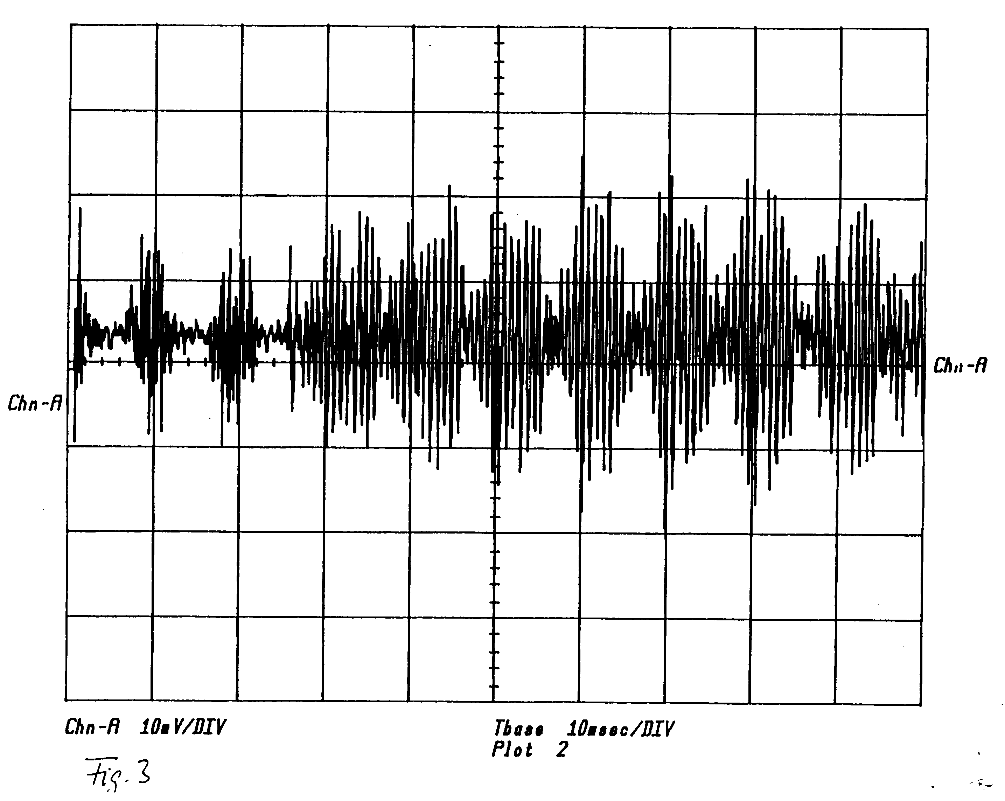

In Fig. 3 ist das Protokoll einer Schwingungsaufnahme dargesteilt von Beschleunigungsmessern, die ebenfalls eine reproduzierbare Überwachung von zu bearbeitenden Werkstücken ermöglichen. Auch hier kann mittels Aufnahme einer Referenzkurve die Überwachung erfolgen, die jeweils aktuelle Ist-Kurve wird dann mit der Referenzkurve verglichen und über eine Auswerteinrichtung etwa gemäß Fig. 2 ausgewertet.

Natürlich ist das beschriebene Ausführungsbeispiel der Erfindung noch in vielfacher Hinsicht abzuändern, ohne den Grundgedanken zu verlassen. So kann beispielsweise die CPU direkt auf den Vortrieb sowohl des Drenantriebes einerseits als auch der Schleifscheibe andererseits geschaltet sein, wie weiter oben bereits erwähnt, können mehr als zwei Meßwertaufnehmer vorgesehen sein u. dgl. mehr.

## Patentansprüche

1. Verfahren zur Erkennung von Bearbeitungsfehlern mechanisch Oberflächen abtragender Schleifmaschinen mit einer Schleifscheibe, die die zu bearbeitenden Flanken von zu schleifenden werkstücken unter Ausübung einer Schleifkraft zwischen Schleitscheibe und Werkstück während der Bearbeitung beaufschlagt,
dadurch gekennzeichnet,
daß zunächst in einem Bearbeitungsprogramm ein Werkstück mit der Schleifscheibe optimal bearbeitet und während der gesamten Bearbeitungszeit Ist-Werte der Schleifkraft erfaßt und als "Soll"-Werte in einer elektronischen Datenverarbeitungseinrichtung gespeichert werden und daß bei den nachfolgenden Bearbeitungsvorgängen von Werkstücken die Schleitkraft als "Ist"-Wert gemessen, dieser Wert in die elektronische Datenverarbeitungseinrichtung eingelesen und mit dem gespeicherten "Soll"-Wert verglichen wird und aus den ermittelten und dokumentierten Werten Bearbeitungsfehler erkannt und angezeigt werden, wobei wenigstens zwei im Winkel zueinander stehende induktive Wegaufnehmer und/oder Beschleunigungsmesser zur Schleifkraftmessung eingesetzt werden und die Meßsignale zweikanalig digitalisiert, gespeichert und gefiltert werden.

2. Verfahren nach Anspruch 1 zur Überwachung von Schleifvorgängen, insbesondere bei Formschleifmaschinen,
dadurch gekennzeichnet,
daß die Schleifkraft direkt an der Werkzeugspindel oder indirekt über die Verformung der Werkzeugaufnahme gemessen wird.

3. Verfahren nach Anspruch 2,
dadurch gekennzeichnet,
daß die Schleifkraft berührungslos über hoch auflösende, induktive Wegaufnehmer an der Werkzeugaufnahme und/oder über bezugspunktfreie Beschleunigungsmesser gemessen wird.

4. Verfahren nach einem der vorangehenden Ansprüche,
dadurch gekennzeichnet,
daß über die Meßwerterfassung zentral die Schleifvorgänge, insbesondere Vorschub- und Antriebsgeschwindigkeit, des Werkzeuges gesteuert werden.

5. Verfahren nach einem der vorangehenden Ansprüche,
dadurch gekennzeichnet,
daß alle Meßsignale in Form von Kurven oder Meßwertkolonnen über einen Drucker ausgedruckt werden.

6. Vorrichtung (1) zur Erkennung von Bearbeitungsfehlern mechanisch Oberflächen abtragender Schleifmaschinen mit einer Schleifscheibe (6), die die zu bearbeitenden Flanken von zu schleifenden Werkstücken (5) unter Ausübung einer Schleifkraft zwischen Schleifscheibe (6) und Werkstück (5) während der Bearbeitung beaufschlagt,
gekennzeichnet durch
wenigstens zwei die Schleifkraft aufnehmende berührungslose Meßaufnehmer (8a, 8b) mit einer zugeordneten, die ermittelten Daten elektronisch verarbeitenden Datenverarbeitungsanlage (9) mit einer Einrichtung zur Aufnahme von Ist-Werten der Schleifkraft während eines ersten vollständigen Bearbeitungszyklus mit der Schleifscheibe (6) und Abspeicherung dieser Werte als "Soll-Werte", und zur Aufnahme von Bearbeitungswerten der Schleifkraft als "Ist-Werte" bei nachfolgenden Bearbeitungszyklen sowie eine Einrichtung zum Vergleich der "Ist-Werte" und der aktuellen "Soll-Werte" mit Erkennung möglicher Bearbeitungsfehler aus diesem Wertvergleich, wobei die beiden berührungslosen Meßaufnehmer (8a,8b) an der Werkstückaufnahme (3) und/oder an der Werkzeugantriebspindel (7) vorgesehen sind, deren wirksame Meßachsen im Winkel zueinander stehen.

7. Vorrichtung nach Anspruch 6,
dadurch gekennzeichnet,
das als Meßwertaufnehmer berührungslos hochauflösende induktive Wegaufnehmer (8) und/oder bezugspunktfreie Beschleunigungsmesser vorgesehen sind.

8. Vorrichtung nach Anspruch 6 oder 7,
dadurch gekennzeichnet,
daß jedem Wegaufnehmer (8) ein elektronischer Verstärker (10), ein Filter (11) und ein A/D-Wandler (12) zugeordnet ist zur Übertragung der Meßwerte auf eine zentrale Prozessoreinheit (CPU) (9).

## Claims

1. Process for recognition of machining faults of grinding machines removing surfaces mechanically, with a grinding wheel by which the flanks of workpieces to be ground are subjected during the machining to a grinding force between the grinding wheel and the workpiece, characterised in that first of all, in a machining programme, a workpiece is machined optimally with the grinding wheel, while throughout the entire machining time actual values of the grinding force are detected and stored as "desired" values in an electronic processing apparatus, and that in the subsequent machining operations on workpieces the grinding force is measured as an "actual" value, this value being read into the electronic data processing apparatus and compared with the stored "desired" value, machining faults being recognized from the determined and documented values and indicated, while at least two inductive displacement pick-ups and/or acceleration meters situated at an angle to one another are used for measuring the grinding force and the measuring signals digitalised in two channels, stored and filtered.

2. Process in accordance with Claim 1 for monitoring grinding operations, particularly in the case of shaped grinding machines, characterised in that the grinding force is measured on the actual tool spindle or indirectly by the deformation of the tool holding fixture.

3. Process in accordance with Claim 2, characterised in that the grinding force is measured without contact, by means of inductive pick-ups of high resolution on the tool holding fixture and/or by means of acceleration meters free of reference points.

4. Process in accordance with any one of the preceding claims, characterised in that the grinding operations, particularly the feed and driving speed, of the tool are controlled centrally by the detection of the measured values.

5. Process in accordance with any one of the preceding claims, characterised in that all measured signals are printed out by a printer in the form of curves or measured value columns.

6. Apparatus (1) for recognition of machining faults of grinding machines removing surfaces mechanically, with a grinding wheel (6) by which the flanks of workpieces (5) to be ground are subjected during the machining to a grinding force between the grinding wheel (6) and the workpiece (5), characterised by at least two contactless measured value recorders (8a, 8b) receiving the grinding force, with a data processing apparatus (9) electronically processing the data determined, with a device for receiving actual values of the grinding force during a first complete machining cycle with the grinding wheel (6) and for storing these values as "desired values", and for receiving machining values of the grinding force as "actual values" in subsequent processing cycles, as well as a device for comparing the "actual values" and the present "desired values", with the detection of any possible machining faults resulting from this comparison of values, while the two contactless measured value recorders (8a, 8b) are provided on the tool holding fixture (3) and/or on the tool drive spindle (7), of which the effective measuring axes are situated at an angle to each other.

7. Apparatus in accordance with Claim 6, characterised in that the measured value recorders provided consist of inductive displacement pick-ups (8) of high resolution without contact and/or acceleration meters free of reference points.

8. Apparatus in accordance with Claim 6 or 7, chraracterised in that each displacement pick-up (8) has associated with it an electronic amplifier (10), a filter (11) and an A/D converter (12), for the transmission of the measured values to a central processing unit (CPU).

## Revendications

1. Procédé pour détecter des défauts de travail de machines à meuler abrasant mécaniquement des surfaces avec une meule qui, pendant le traitement, touche les flancs devant être traités des pièces à meuler en exerçant une force abrasive entre la meule et la pièce à usiner, caractérisé en ce qu'une pièce à usiner est tout d'abord travaillée de manière optimale avec la meule dans un programme de traitement et que pendant tout le temps de traitement, les valeurs réelles de la force abrasive sont enregistrées et mémorisées comme valeurs « théoriques » dans un système de traitement informatique des données et en ce que pour les opérations suivantes de traitement des pièces à usiner, la force abrasive est mesurée comme valeur « réelle », en ce que cette valeur est lue dans le système de traitement informatique des données et comparée à la valeur « théorique » mémorisée et en ce qu'à partir des valeurs déterminées et documentées, des défauts de travail sont détectés et affichés, deux capteurs de déplacement inductifs situés l'un et l'autre dans l'angle et/ou un accéléromètre étant au moins utilisés pour mesurer la force abrasive et les signaux mesurés étant numérisés, mémorisés et filtrés sur deux canaux.

2. Procédé selon la revendication 1 pour contrôler les opérations de meulage, notamment pour les machines à meule de forme, caractérisée en ce que la force abrasive est mesurée directement sur la tige de l'outil ou indirectement par l'intermédiaire du façonnage de la fixation de l'outil.

3. Procédé selon la revendication 2, caractérisé en ce que la force abrasive est mesurée sans contact par l'intermédiaire de capteurs de déplacement inductifs à haute résolution sur la fixation de l'outil et/ou par des accéléromètres sans point de référence.

4. Procédé selon l'une quelconque des revendications précédentes, caractérisé en ce que les opérations de meulage, notamment la vitesse d'avancement et d'entraînement de l'outil sont centralisées par l'enregistrement des mesures.

5. Procédé selon l'une quelconque des revendications précédentes, caractérisé en ce que tous les signaux mesurés sont exprimés sous forme de courbes ou de colonnes de mesures par l'intermédiaire d'une imprimante.

6. Dispositif (1) pour détecter les défauts de travail de machines à meuler abrasant mécaniquement les surfaces, avec une meule (6) qui pendant le traitement, touche les flancs devant être traités des pièces à meuler (5) en exerçant une force abrasive entre la meule et la pièce à usiner (5), caractérisé par au moins deux capteurs de mesure (8a, 8b) sans contact enregistrant la force abrasive, avec un système de traitement des données (9) correspondant, traitant électroniquement les données déterminées et doté d'un dispositif permettant d'enregistrer les valeurs réelles de la force abrasive pendant un premier cycle complet de traitement avec la meule (6) et de mémoriser ces valeurs en tant que « valeurs théoriques » et d'enregistrer les valeurs de traitement de la force abrasive en tant que « valeurs réelles » lors des cycles de traitement suivants ainsi que par un dispositif permettant de comparer les « valeurs réelles » et les « valeurs théoriques » actuelles avec une détection des éventuels défauts de travail à partir de cette comparaison des valeurs, les deux capteurs de mesure (8a, 8b) sans contact dont les axes effectifs de mesure se trouvent l'un et l'autre dans l'angle, étant prévus sur la fixation de la pièce à usiner (3) et/ou sur la tige d'entraînement de l'outil (7).

7. Dispositif selon la revendication 6, caractérisé en ce que des capteur de déplacement (8) inductifs, à haute résolution, sans contact et/ou des accéléromètres sans point de référence sont prévus comme capteurs de mesure.

8. Dispositif selon la revendication 6 ou 7, caractérisé en ce qu'un amplificateur électronique (10), un filtre (11) et un convertisseur A/N (12) sont affectés à chaque capteur de déplacement (8) pour transférer les valeurs mesurées à une unité centrale (UC) (9).
